# EUROPEAN PATENT APPLICATION

(11) **EP 4 395 036 A1**
(43) Date of publication of application: **03.07.2024**
(21) Application number: 23197493.2
(22) Date of filing: 14.09.2023
(51) Int. Cl.: H01M 50/308, H01M 10/0525, H01M 10/613, H01M 10/625, H01M 10/63, H01M 10/647, H01M 50/209, H01M 50/249, H01M 50/342, H01M 50/358, H01M 50/383

(54) **VENTED BATTERY MODULE AND METHOD**

(30) Priority: 29.12.2022 US 202263436015 P
(71) Applicant: Aspen Aerogels, Inc., Northborough MA 01532 (US)
(72) Inventor: WANG, Lixin, Northborough, 01532 (US); STOW, Christopher, Northborough, 01532 (US); NAM, Younggyu, Northborough, 01532 (US)
(74) Representative: Forresters IP LLP

(57) **Abstract**

A battery module, and associated methods are disclosed. In one aspect, a battery module includes thermal isolation structures with a structural support plate and an aerogel layer. Aspects of thermal isolation structures are shown that include a module cover contact located on a top end of a structural support plate.

## Description

### Claim or Priority

This application claims the benefit of priority to U.S. Patent Application Serial No. 63/436,015, filed on December 29, 2022, which is incorporated by reference herein in its entirety.

### Technical Field

The present disclosure relates generally to materials and systems and methods for preventing or mitigating thermal events, such as thermal runaway issues, in energy storage systems. In particular, the present disclosure provides thermal barrier materials. The present disclosure further relates to a battery module or pack with one or more battery cells that includes the thermal barrier materials, as well as systems including those battery modules or packs. Aspects described generally may include aerogel materials.

### Background

Lithium-ion batteries (LIBs) are widely used in powering portable electronic devices such as cell phones, tablets, laptops, power tools and other high-current devices such as electric vehicles because of their high working voltage, low memory effects, and high energy density compared to traditional batteries. However, safety is a concern as LIBs are susceptible to catastrophic failure under "abuse conditions" such as when a rechargeable battery is overcharged (being charged beyond the designed voltage), over-discharged, operated at or exposed to high temperature and high pressure.

To prevent cascading thermal runaway events from occurring, there is a need for effective insulation and heat dissipation strategies to address these and other technical challenges of LIBs.

### Brief Description of the Drawings

FIG. 1A shows an isometric view of a battery module in accordance with some aspects.
FIG. 1B shows another isometric view of a battery module in accordance with some aspects.
FIG. 2A shows another isometric view of a battery module in accordance with some aspects.
FIG. 2B shows a cross-sectional view of a battery module in accordance with some aspects.
FIG. 2C shows another isometric view of a battery module in accordance with some aspects.
FIG. 3A shows another isometric view of a battery module in accordance with some aspects.
FIG. 3B shows another isometric view of a battery module in accordance with some aspects.
FIG. 4A shows another isometric view of a battery module in accordance with some aspects.
FIG. 4B shows another isometric view of a battery module in accordance with some aspects.
FIG. 5A shows another isometric view of a battery module in accordance with some aspects.
FIG. 5B shows another isometric view of a battery module in accordance with some aspects.
FIG. 6 shows another isometric view of a battery module in accordance with some aspects.
FIG. 7 shows another isometric view of a battery module in accordance with some aspects.
FIG. 8A shows another isometric view of a battery module in accordance with some aspects.
FIG. 8B shows another isometric view of a battery module in accordance with some aspects.
FIG. 9 shows another isometric view of a battery module in accordance with some aspects.
FIG. 10A shows a side and top view of a battery module in accordance with some aspects.
FIG. 10B shows another top view of a battery module in accordance with some aspects.
FIG. 11 shows a method of forming a battery module in accordance with some aspects.
FIG. 12 shows an electronic device in accordance with some aspects.
FIG. 13 shows an electric vehicle in accordance with some aspects.

### Detailed Description

The following description and the drawings sufficiently illustrate specific aspects to enable those skilled in the art to practice them. Other aspects may incorporate structural, logical, electrical, process, and other changes. Portions and features of some aspects may be included in, or substituted for, those of other aspects. Aspects set forth in the claims encompass all available equivalents of those claims. In the following detailed description, reference is made to the accompanying drawings, which form a part thereof, and within which are shown by way of illustration specific embodiments by which the disclosure may be practiced. It is to be understood that other aspects may be utilized, and structural changes may be made without departing from the scope of the disclosure.

### Overview

The present disclosure is directed to a stack (e.g., a battery module or a battery pack) of battery cells (e.g., lithium-ion cells) with a channel designed to guide the ejecta (e.g., venting gas or particles) from the battery cells during a thermal runaway event. The channel is formed in multiple cover layers displaced over the stack of battery cells. The channel directs the thermal runaway ejecta away from mechanically weaker portions of the battery cells (e.g., venting holes) and away from the stack, thereby minimizing the damage to the stack caused by the ejecta.

In one aspect, multiple cover layers of a battery pack include a first layer comprising holes aligned with the mechanically weaker portions of the battery cells (e.g., venting holes) to accommodate thermal runaway ejecta. The first layer may further comprise holes to accommodate battery terminals, such that the first layer is co-planar with the battery terminals. In this compact form, the first layer occupies the same plane as the battery terminals rather than occupying additional space over the battery terminals. This configuration efficiently utilizes the limited space above the stack of cells in a battery pack or module. The first layer may be an insulation layer, a resilient layer, a rigid layer, or combinations thereof. In one aspect, the first layer may be an aerogel layer to prevent heat transfer from a cell experiencing thermal runaway to other cells in the battery pack that are not experiencing thermal runaway.

In one aspect, the multiple cover layers further include a second layer comprising a channel space for directing the thermal runaway ejecta. The channel space in the second layer aligns with the holes in the first layer. This alignment between the channel space in the second layer and the venting holes in the first layer directs thermal runaway ejecta though the channel space and away from the stack. The second layer may further comprise holes aligned with the battery terminals in a similar manner to the first layer. The second layer may be an insulation layer, a resilient layer, or a rigid layer. In one aspect, the second layer may be a foam layer to provide resilience (e.g., reversible compressibility) for the battery housing enclosing the battery stack.

In one aspect, the channel space of the second layer comprises a tube configured and dimensions to fit within the channel space. The tube, within the channel space, is disposed in and protected by the second layer. The tube may further be protected from mechanical damage when the second layer is a resilient layer. The tube further enhances the protection of the battery cells against the thermal runaway ejecta, especially against damaged caused by bombardment from thermal runaway ejecta. The channel may be selected from but not limited to a mica pipe, a stainless-steel pipe, or an aluminum pipe.

In one aspect, the multiple cover layers further include a third layer without holes and without a channel space. The third layer may act as a barrier to prevent thermal runaway ejecta from damaging components adjacent to the battery stack, e.g., the passenger compartment in an electrical vehicle. In one aspect, the third layer may be a rigid layer selected from aerogel plate, mica plate, stainless-steel plate, titanium alloy plate, titanium plate, or any other rigid layers that resist damage from (and reduce dispersal of) the thermal runaway ejecta.

In one aspect, the multiple cover layers further include a fourth layer. The fourth layer may add an additional layer of protection between the channel and the electrical devices of the battery stack. The electrical devices may include, but are not limited to, busbars, electrical connectors, wires, sensors, and battery management circuits. The fourth layer may be disposed between the first layer and the second layer or between the second layer and the third layer, such that the fourth layer isolates the electrical devices and the venting channel. In other words, the fourth layer is disposed between the electrical devices and the venting channel. The fourth layer may be an insulation layer, a resilient layer, or a rigid layer. In one aspect, the fourth layer may be an aerogel layer the same as the first layer.

In one aspect, the battery cell stack is enclosed in a housing and a housing lid. The multiple cover layers of the battery stack may be disposed between the battery stack and the housing lid or between the battery stack and a wall (e.g., sidewall) of the housing. The channel space in the multiple cover layers directs the thermal runaway ejecta outside the housing. In some aspects, a channel may direct the thermal runaway ejecta to the side or the bottom of the housing, or in any direction that reduces or minimizes exposure of sensitive components (e.g., electrical devices, battery management circuits, integrated circuits) to thermal runaway ejecta and its associated damaging effects.

In one aspect, more than one of the battery cell stacks may be placed in one housing. The more than one battery cell stacks may share one or more of the first layer, the second layer, the third layer and the fourth layer. In one aspect, the more than one battery cell stacks may each have a first layer and a second layer, while sharing the third layer and the fourth layer. The channels of the more than one battery cell stacks may feed to a trunk in the housing, through which the thermal runaway ejecta is directed outside the housing.

Materials used in the multiple cover layers described below, such as insulation materials in the insulation layer, rigid materials in the rigid layer, resilient materials in the resilient layer, etc. as described below in various aspect, can be used in battery modules to compartmentalize individual cells, or groups of cells in a battery device. Multiple battery cells that are coupled together are referred to in the present disclosure as battery modules. However, devices and methods described can be used in any of several types of multiple cell arrangements, that may be termed battery packs, battery systems, etc.

Insulation materials as described below can be used as a single heat resistant layer, or in combination with other layers that provide additional function to a multilayer configuration, such as mechanical strength, compressibility, heat dissipation/conduction, etc.

### I. Materials for the insulation layer

Insulation layers described herein are responsible for reliably containing and controlling heat flow from heat-generating parts in small spaces and to provide safety and prevention of fire propagation for such products in the fields of electronic, industrial and automotive technologies. In many aspects of the present disclosure, an insulation layer as described herein may function as a flame/fire deflector layer either by itself or in combination with other materials that enhance performance of containing and controlling heat flow. In one aspect, the insulation layer may itself be resistant to flame and/or hot gases and further include entrained particulate materials or other types of additives or layers that modify or enhance heat containment and control.

One aspect of a highly effective insulation layer includes an aerogel. Aerogels describe a class of material based upon their structure, namely low density, open cell structures, large surface areas (often 900 m²/g or higher) and subnanometer scale pore sizes. The pores may be filled with gases such as air. Aerogels can be distinguished from other porous materials by their physical and structural properties. Although an aerogel material is an exemplary insulation material, the invention is not so limited. Other thermal insulation material layers may also be used in aspects of the present disclosure.

Selected aspects of aerogel formation and properties are described. In several aspects, a precursor material is gelled to form a network of pores that are filled with solvent. The solvent is then extracted, leaving behind a porous matrix. A variety of different aerogel compositions are known, and they may be inorganic, organic and inorganic/organic hybrid. Inorganic aerogels are generally based upon metal alkoxides and include materials such as silica, zirconia, alumina, and other oxides. Organic aerogels include, but are not limited to, urethane aerogels, resorcinol formaldehyde aerogels, and polyimide aerogels.

Inorganic aerogels may be formed from metal oxide or metal alkoxide materials. The metal oxide or metal alkoxide materials may be based on oxides or alkoxides of any metal that can form oxides. Such metals include, but are not limited to silicon, aluminum, titanium, zirconium, hafnium, yttrium, vanadium, cerium, and the like. Inorganic silica aerogels are traditionally made via the hydrolysis and condensation of silica-based alkoxides (such as tetraethoxylsilane), or via gelation of silicic acid or water glass. Other relevant inorganic precursor materials for silica based aerogel synthesis include, but are not limited to metal silicates such as sodium silicate or potassium silicate, alkoxysilanes, partially hydrolyzed alkoxysilanes, tetraethoxylsilane (TEOS), partially hydrolyzed TEOS, condensed polymers of TEOS, tetramethoxylsilane (TMOS), partially hydrolyzed TMOS, condensed polymers of TMOS, tetra-n-propoxysilane, partially hydrolyzed and/or condensed polymers of tetra-n-propoxysilane, polyethylsilicates, partially hydrolyzed polyethysilicates, monomeric alkylalkoxy silanes, bis-trialkoxy alkyl or aryl silanes, polyhedral silsesquioxanes, or combinations thereof.

In certain embodiments of the present disclosure, pre-hydrolyzed TEOS, such as Silbond H-5 (SBH5, Silbond Corp), which is hydrolyzed with a water/silica ratio of about 1.9-2, may be used as commercially available or may be further hydrolyzed prior to incorporation into the gelling process. Partially hydrolyzed TEOS or TMOS, such as polyethysilicate (Silbond 40) or polymethylsilicate may also be used as commercially available or may be further hydrolyzed prior to incorporation into the gelling process.

Inorganic aerogels can also include gel precursors comprising at least one hydrophobic group, such as alkyl metal alkoxides, cycloalkyl metal alkoxides, and aryl metal alkoxides, which can impart or improve certain properties in the gel such as stability and hydrophobicity. Inorganic silica aerogels can specifically include hydrophobic precursors such as alkylsilanes or arylsilanes. Hydrophobic gel precursors may be used as primary precursor materials to form the framework of a gel material. However, hydrophobic gel precursors are more commonly used as co-precursors in combination with simple metal alkoxides in the formation of amalgam aerogels. Hydrophobic inorganic precursor materials for silica based aerogel synthesis include, but are not limited to trimethyl methoxysilane (TMS), dimethyl dimethoxysilane (DMS), methyl trimethoxysilane (MTMS), trimethyl ethoxysilane, dimethyl diethoxysilane (DMDS), methyl triethoxysilane (MTES), ethyl triethoxysilane (ETES), diethyl diethoxysilane, dimethyl diethoxysilane (DMDES), ethyl triethoxysilane, propyl trimethoxysilane, propyl triethoxysilane, phenyl trimethoxysilane, phenyl triethoxysilane (PhTES), hexamethyldisilazane and hexaethyldisilazane, and the like. Any derivatives of any of the above precursors may be used and specifically certain polymeric of other chemical groups may be added or cross-linked to one or more of the above precursors.

Organic aerogels are generally formed from carbon-based polymeric precursors. Such polymeric materials include, but are not limited to resorcinol formaldehydes (RF), polyimide, polyacrylate, polymethyl methacrylate, acrylate oligomers, polyoxyalkylene, polyurethane, polyphenol, Polybutadiene, trialkoxysilyl-terminated polydimethylsiloxane, polystyrene, polyacrylonitrile, polyfurfural, melamine-formaldehyde, cresol formaldehyde, phenol-furfural, polyether, polyol, polyisocyanate, polyhydroxybenze, polyvinyl alcohol dialdehyde, polycyanurates, polyacrylamides, various epoxies, agar, agarose, chitosan, and combinations thereof. In one aspect, organic RF aerogels are typically made from the sol-gel polymerization of resorcinol or melamine with formaldehyde under alkaline conditions.

Organic/inorganic hybrid aerogels are mainly comprised of organically modified silica ("ormosil") aerogels. These ormosil materials include organic components that are covalently bonded to a silica network. Ormosils are typically formed through the hydrolysis and condensation of organically modified silanes, R-Si(OX)₃, with traditional alkoxide precursors, Y(OX)₄. In these formulas, X may represent, for example, CH₃, C₂H₅, C₃H₇, C₄H₉; Y may represent, for example, Si, Ti, Zr, or Al; and R may be any organic fragment such as methyl, ethyl, propyl, butyl, isopropyl, methacrylate, acrylate, vinyl, epoxide, and the like. The organic components in ormosil aerogel may also be dispersed throughout or chemically bonded to the silica network.

Aerogels can be formed from flexible gel precursors. Various flexible layers, including flexible fiber-reinforced aerogels, can be readily combined and shaped to give pre-forms that when mechanically compressed along one or more axes, give compressively strong bodies along any of those axes.

One method of aerogel formation includes batch casting. Batch casting includes catalyzing one entire volume of sol to induce gelation simultaneously throughout that volume. Gel-forming techniques include adjusting the pH and/or temperature of a dilute metal oxide sol to a point where gelation occurs. Suitable materials for forming inorganic aerogels include oxides of most of the metals that can form oxides, such as silicon, aluminum, titanium, zirconium, hafnium, yttrium, vanadium, and the like. Particularly preferred are gels formed primarily from alcohol solutions of hydrolyzed silicate esters due to their ready availability and low cost (alcogel). Organic aerogels can also be made from melamine formaldehydes, resorcinol formaldehydes, and the like.

In one aspect, aerogel materials may be monolithic, or continuous throughout a structure or layer. In other aspects, an aerogel material may include a composite aerogel material with aerogel particles that are mixed with a binder. Other additives may be included in a composite aerogel material, including, but not limited to, surfactants that aid in dispersion of aerogel particles within a binder. A composite aerogel slurry may be applied to a supporting plate such as a mesh, felt, web, etc. and then dried to form a composite aerogel structure.

As noted above, an aerogel may be organic, inorganic, or a mixture thereof. In some aspects, the aerogel includes a silica-based aerogel. One or more layers in a thermal barrier may include a reinforcement material. The reinforcing material may be any material that provides resilience, conformability, or structural stability to the aerogel material. Aspects of reinforcing materials include, but are not limited to, open-cell macroporous framework reinforcement materials, closed-cell macroporous framework reinforcement materials, open-cell membranes, honeycomb reinforcement materials, polymeric reinforcement materials, and fiber reinforcement materials such as discrete fibers, woven materials, non-woven materials, needled nonwovens, battings, webs, mats, and felts.

The reinforcement material can be selected from organic polymer-based fibers, inorganic fibers, carbon-based fibers or a combination thereof. In various aspects, the inorganic fibers are selected from glass fibers, rock fibers, metal fibers, boron fibers, ceramic fibers, basalt fibers, or combinations thereof. In some aspects, the reinforcement material can include a reinforcement including a plurality of layers of material.

### II. Materials for the rigid layer

In addition to the thermal insulating layer, the rigid layer in combination with thermal insulating layer are effective at protecting the components adjacent to the battery stacks (e.g., a passenger compartment in an electrical vehicle) in a thermal runaway event. The rigid layer effectively protects components of the battery and its associated electrical devices from the bombardment of the particles in the thermal runaway ejecta. Aspects of rigid materials used in the rigid layer include, but are not limited to, carbon fiber, graphite, silicon carbide, copper, stainless steel, aluminum, titanium, other metals, titanium alloys, other metal alloys, and combinations thereof.

An additional function of the rigid layer is to channel unwanted heat to a desired external location, such as external heat dissipating fins, a heat dissipating housing, or other external structure to dissipate unwanted heat to outside ambient air or other heat dissipation location (e.g., a heat exchanger, a heat sink). The heat dissipating function is especially prominent when the rigid layer is a rigid metal plate. In one aspect, a thermally conductive layer or layers helps to dissipate heat away from a localized heat load within a battery module or pack.

To aid in the distribution and removal of heat by, in at least one embodiment the thermally conductive layer is coupled to a heat sink. A variety of heat sink types and configurations, as well as different techniques for coupling the heat sink to the thermally conductive layer are encompassed within the present disclosure. The present disclosure is not limited to the use of any one type of heat sink/coupling technique. In one aspect, at least one thermally conductive layer of the multilayer materials disclosed herein can be in thermal communication with an element of a cooling system of a battery module or pack, such as a cooling plate or cooling channel of the cooling system. In another aspect, at least one thermally conductive layer can be in thermal communication with other elements of the battery pack, battery module, or battery system that can function as a heat sink, such as the walls of the pack, module or system, or with other ones of the multilayer materials disposed between battery cells. Thermal communication between the thermally conductive layer and heat sink elements within the battery system can allow for removal of excess heat from the cell or cells adjacent to the multilayer material to the heat sink, thereby reducing the effect, severity, or propagation of a thermal event that may generate excess heat. In addition to removal of heat, a thermally conductive layer can spread, or dissipate heat from a region of high heat concentration to a region of lower heat concentration.

### III. Materials for resilient layer

In addition to thermal insulating layers and the rigid layer, the multiple cover layers may further include one or more resilient layers to accommodate a channel for use in venting. In some aspects, a tube may be disposed within the channel. The tube may further contain and redirect thermal runaway ejecta away from sensitive portions of the battery pack. The resilient layer also accommodates mechanical stress placed on the battery module or pack during operation or abuse conditions. In one aspect, the resilient layer may absorb mechanical stresses and strains (e.g., due to an elastic modulus less than 1 GPa, less than 100 MPa) that in turn prevents mechanical stresses from damaging the tube and/or the battery pack.

Materials for the resilient material layers may include, but are not limited to, foam, fiber, fabric, sponge, spring structures, rubber, polymer, etc. In one aspect, the resilient material layer includes an aerogel layer, such as a monolithic aerogel layer, an aerogel plate, an aerogel blanket, an fiber reinforced aerogel blanket, other aerogel layers, and combinations thereof. Additional resilient layers may be disposed adjacent to battery cells or between cells. In one aspect, a resilient layer absorbs any volume expansion during the regular operation of one or more battery cells. In one aspect during a charge, the cells may expand, and during a discharge, the cells may shrink. In one aspect, the resilient layer may also absorb permanent volume expansion caused by any battery cell degradation and/or thermal runaway. In one aspect, the resilient layer may be compressed to 5% to 95%, 10% to 90%, 30% to 90%, 40% to 85%, 60% to 80%, or any of the percentages ranges described herein of its original thickness.

### IV. Example Aspects

### A. Multiple cover Layer(s) and Optional Channel

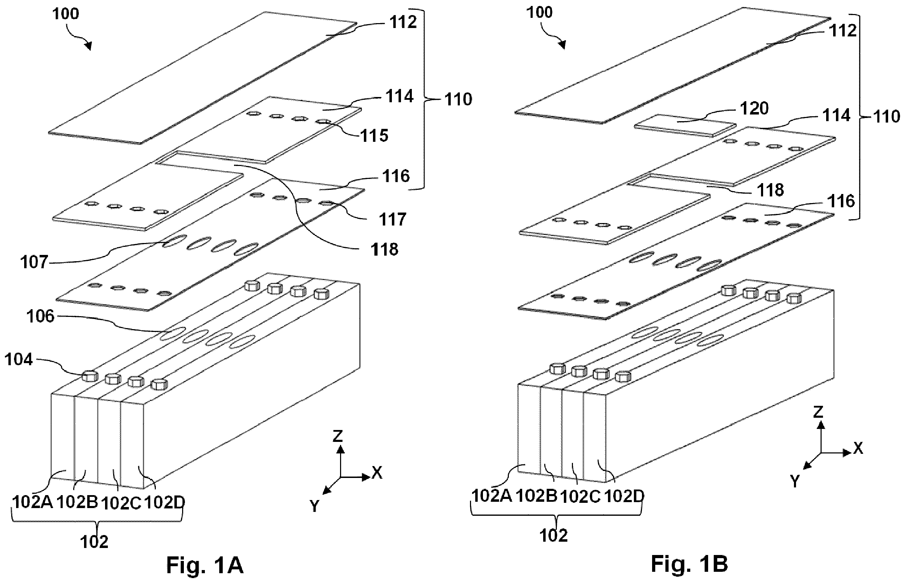

Figure 1A illustrates a battery module 100 that includes a channel defined by one or more cover layers. This channel formed in the cover layer(s) directs thermal runaway ejecta away from the battery module, thereby protecting the battery module components from damage.

Figure 1A shows one aspect of a battery module 100. The battery module 100 further includes a stack of battery cells 102, a multiple cover layers 110 that includes one or more of a first layer 116, a second layer 114, and/or a third layer 112, each of which is described below in more detail.

In one aspect, the stack of cells 102 includes individual lithium ion cells 102A, 102B, 102C, 102D (collectively referred to as the stack of cells 102). Several configurations of lithium ion cells 102 are possible. In one aspect, the stack of lithium ion cells 102 includes lithium ion pouch cells or lithium ion prismatic cells, although the invention is not so limited. The cells 102 in Figure 1A each include an electrical terminal 104.

In the aspect of Figure 1A, a vent 106 is included on each cell 102A, 102B, 102C, 102D in the stack of cells 102. In the event of a thermal runaway in a given cell 102, or number of cells in the stack of cells 102, the vents 106 directs hot gasses and flames away from the cells 102. It is desirable to direct (and vent to an exterior) any hot gasses and flames in a direction away from the stack of cells 102 and any sensitive control components (e.g., to the side direction of the battery module), and to a safe location (e.g., away from a passenger compartment).

In the aspect of Figure 1A, multiple cover layers 110 are included over a side of the stack of lithium-ion cells that includes electrical terminals 104. By stacking the first layer 116, the second layer 114, and the third layer 112 together over the cells 102 and associated vents 106, an enclosed channel 118 is formed from the assembly of various layers, such as the first layer 116, the second layer 114, and the third layer 112. The channel 118 and spaces/holes in one or more adjacent layers align.

The first layer 116 of the multiple cover layers 110 is shown as having holes 117 to accommodate terminals 104 corresponding to cells 102A-102D of the stack of cells 102. The first layer 116 also defines vent holes 107. The vent holes 107 align with corresponding vents 106 of the cells in the stack of cells 102.

The second layer 114 of the multiple cover layers 110 is shown as including holes 115 to correspond to, and accommodate terminals 104. A channel 118 is defined in the second layer 114. The channel 118 aligns with the vents 106 and the vent holes 107.

A third layer 112 is shown as continuous (i.e., does not define or otherwise include holes). The third layer 112 is to protect components (passenger compartment) above battery module 100 in abnormal conditions, such as thermal runaway.

In one aspect, the first layer 116, the second layer 114, and the third layer 112 of the multiple cover layer 110 may be fabricated from the same material. In one aspect, the layers of the multiple cover layer 110 include more than one material for different layers. Layers adjacent to the channel 118 should be thermally insulating layers, to facilitate channeling of hot gasses and flames and prevent damage to the layer(s) (e.g., the second layer 114) itself from exposure to the thermal runaway ejecta. In one aspect, one or more layers of the multiple cover layers 110 includes an aerogel layer. Other layers may include structural materials, such as polymers, stainless steel, etc. In one aspect, a structural material provide sufficient rigidity to withstand operating stress without deformation. One example of a heat resistant layer includes a mica containing layer. Resilient material layers may be included to better accommodate packing within a subsequent battery housing (not shown). In one aspect, the first layer 116 is an aerogel blanket, the second layer 114 is a foam material, and the third layer 112 is a mica plate. In one aspect, the first layer 116 is an aerogel blanket, the second layer 114 is a foam material, the third layer 112 is an aerogel plate.

In one aspect, the layers 114 and 116 are aerogel layers and the layer 112 is a rigid layer including a structural material. Although three layers 116, 114, 112 are shown as components of the multiple cover layers 110, the invention is not so limited. Fewer than three layers, or more than three layers are included in other aspects of the multiple cover layers 110. Layers of the multiple cover layers 110 may be connected, for example by glue, stitching, taping, heat pressing, etc. In some aspects, at least a portion of the multiple cover layers 110 fills in the vertical space created by the terminals 104, therefore using the otherwise empty space between the top of the battery cells 102 and the top of the terminals 104.

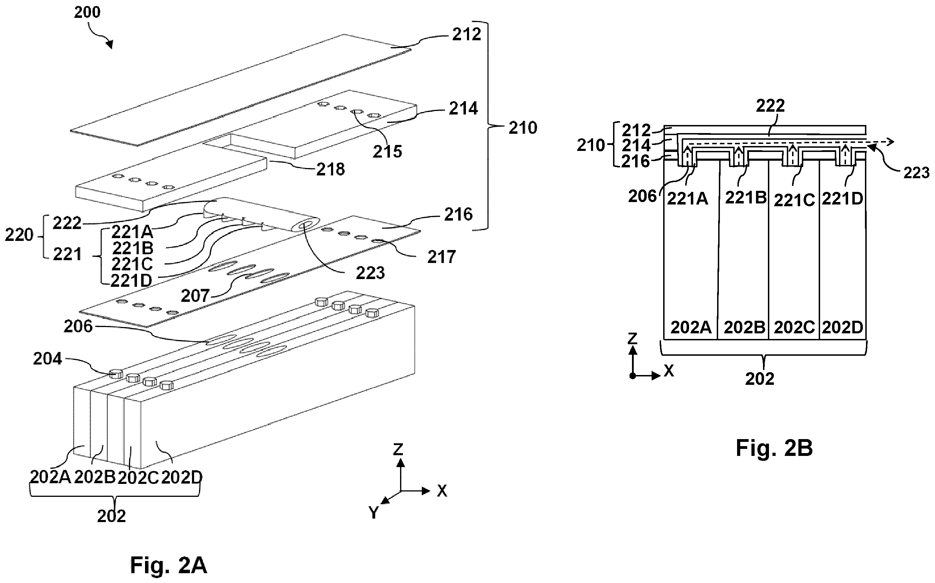

In some aspects, the multiple cover layers 110 is configured to define the channel 118 configured to receive venting gases from the vent 106 (oriented in the vent direction). In some aspects, the channel 118 is oriented in a channel direction (e.g., X direction). Analogous to the vent direction of the vent 106 described above and as illustrated in Figure 1A, the channel 118 and its corresponding channel direction (e.g., X direction) may be oriented so that thermal runaway ejecta can be directed away from passenger compartments, sensitive electronics, flammable components such as rubber hoses, or other aspects of the vehicle that would otherwise be damaged by exposure to thermal runaway ejecta. In some examples, the channel direction (e.g., X direction) is substantially perpendicular to the vent direction (an illustration of which is found by the vertical arrows in Figure 2B), although the invention is not so limited. Battery modules that include a channel 118 as described in the aspect of Figure 1A, and other aspects described below can be installed in devices such as electric vehicles in any number of desired orientations, and any venting gasses can be directed away from unwanted areas, giving more orientation and location options for electric vehicle designers. Although an electric vehicle is used as an aspect, the invention is not so limited. Redirection of venting gases and flames can also be applied to other battery powered electric devices.

Figure 1B shows a variation to the illustrative battery module described in Figure 1A. In Figure 1B, the channel 118 formed by the adjacent layers as described above in Figure 1A is filled with a sacrificial material 120. A sacrificial material 120 serves as a gap filler during the regular operation of the battery module. The sacrificial material 120 may be burn away in an event of venting gasses and flames. The sacrificial material layer may have low combustion heat. The sacrificial material 120 may include polymer, foam, fiber, other suitable materials that burns away with low combustion heat, and combinations thereof.

The addition of the sacrificial material 120 to the illustrative configuration shown in Figure 1A provides advantages, such as keeping the channel 118 sealed until a venting event occurs. One benefit of sealing the channel 118 is that dust or debris is excluded from the channel, the vents 106, and therefore the interior of the battery pack and battery stack.

Another advantage of the features shown in Figure 1A, associated with the presence of a sacrificial material 120, includes helping the channel 118 maintain its shape within the multiple cover layers 110 until a thermal runaway event occurs. In one aspect, one or more of the multiple cover layers 110 includes an aerogel material. Some aerogel materials can be fragile, although highly thermally insulating. In one aspect, the sacrificial material 120 burns away without or with limited residue and heat generation in the event of venting or thermal runaway. In an alternative aspect, the sacrificial material 120 absorbs heat when burning away in the event of venting or thermal runaway. The inclusion of the sacrificial material 120 will help maintain the integrity of an aerogel layer until a venting event occurs.

### B. Multiple Cover Layer(s), Channel, and Tube

Figure 2A shows an exploded perspective view of one aspect of a battery module 200 that includes a tube disposed within a channel defined by multiple cover layers. In one aspect, the tube is a separate component from the multiple cover layers. The tube provides protection to the battery module beyond that provided by the embodiments described above. In some aspects, the structure of the tube further confines and directs thermal runaway ejecta away from battery components beyond the confinement and direction provided by a channel alone. For example, the use of a tube may prevent ejecta from penetrating gaps between layers within a stack and/or eroding portions of the layers exposed to the ejecta.

The battery module 200 shown in Figure 2A includes a stack of cells 202 of battery cells 202A, 202B, 202C, 202D, a multiple cover layer 210 that include a first layer 216, a second layer 214, and a third layer 212. The battery module 200 also includes a tube 220.

The cells 202A, 202B, 202C, 202D (collectively 202A-202D) in Figure 2A are analogous to those described above. As in preceding illustrations and descriptions, cells 202A-202D may each include a set of electrical terminals 204. Furthermore, one or more of the cells 202A-202D may individually include a vent 206. The preceding description of a vent applies to the vent 206.

The multiple cover layers 210 includes one or more cover layers, each of which may be selected for one or more protection functions. In the illustrated battery module 200 shown, the multiple cover layers 210 includes three cover layers: a first layer 216, a second layer 214, and a third layer 212, each of which is described in more detail below.

In some aspects, the multiple cover layer 210 is disposed on and/or over a side of the lithium-ion cells 202A-202D that includes the electrical terminals 204. In some aspects, to minimize space occupied by the multiple cover layer 210 and/or to reduce a gap between the first layer 216 and a top surface of the cells 202A-202D, the first layer 216 may define holes 217 to accommodate terminals 204. In this way, the first layer 216 may be in contact with the top surface of cells 202A-202D that is adjacent to and confronting the first layer 216.

The first layer 216 shown in Figure 2A includes vent holes 207. In some aspects, the vent holes 207 of the first layer 216 align with the vents 206 of cells 202A-202D. In this way, analogous to aspects described above in the context of Figure 2B, the vent holes 207 and the vents 206 are in communication to form an exit path (shown in dashed line in Figure 2B) from one or more of the cells 202A-202D to a corresponding port of the tube 220. The channel thus physically contains ejecta as it travels from one or more of the cells 202A-202D to the tube 220, providing protection to other components of the battery module 200.

The second layer 214 may be disposed on a side of the first layer 216 that is opposite that of the cells 202A-202D. In some aspects, the second layer 214 may be disposed between the first layer 216 and the third layer 212. The second layer 214 may be fabricated from a resilient material to provide cushion for the battery module 200.

In some aspects, the second layer 214 defines a channel 218. The channel 218 is analogous to channel 118 described above in the context of Figures 1A and 1B. As described previously, the channel 218 may be configured and dimensioned to receive the tube 220, which is described below in more detail.

A third layer 212 may be located on a side of the second layer 214 that is opposite that of the first layer 216. Unlike the preceding layer, the third layer 212 in this aspect is continuous, lacking any holes and/or channels. The third layer 212 protects components (e.g., the passenger compartment) adjacent to the battery module 200 from the damages of the thermal runaway ejecta exits from the battery cells 202.

While materials for the layers are described above in the context of each individual layer, it will be appreciated that, collectively, the layers 216, 214, 212 of the multiple cover layers 210 may be fabricated from a same material in some aspects. In other aspects, the layers of the multiple cover layer 210 may each include more than one material and/or different ones of the layers 216, 214, 212 may be fabricated from different layers. In some aspects, layers adjacent to the channel 218 (e.g., layer 214, layer 114) may be thermally insulating layers to facilitate adjacent heated components. In one aspect, one or more layers of the multiple cover layer 210 includes an aerogel layer. Any one or more of the layers 216, 214, 212 may include structural materials, such as polymers, or metals such as stainless steel. Resilient material layers may be included in the multiple cover layers 210. In some aspects, layers of the multiple cover layers 210 may be connected, in some aspects, by adhesives, stitching, taping, heat pressing, mechanical adhesion (e.g., hook-and-loop connectors), among others.

In one aspect, the first layer 216 of the multiple cover layers 210 is an insulation layer, such as an aerogel layer. In one aspect, the second layer 214 of the multiple cover layers 210 is a resilient layer. In one aspect, the third layer 212 of the multiple cover layers 210 is a rigid layer.

As indicated above, the battery module 200 includes a tube 220 configured to fit within channel 218 of the second layer 214. In some aspects, because the second layer 214 is fabricated from a resilient (and optionally a thermal insulating material), the second layer 214 provides a cushion (e.g., via an elastic modulus of less than 500 MPa) for the tube 220. The cushion provided by the resilient material used to form the second layer 212 may act to prevent damage from possible mechanical impact of the battery module 200.

The tube 220 illustrated in Figure 2A may include multiple sub-channels 221A, 221B, 221C, 221D (collectively 221) and a main channel port 222. The main channel port may terminate in an exit port 223 that provides an exit for ejecta in a direction that is away from sensitive portions of the battery pack and away from the passenger compartment.

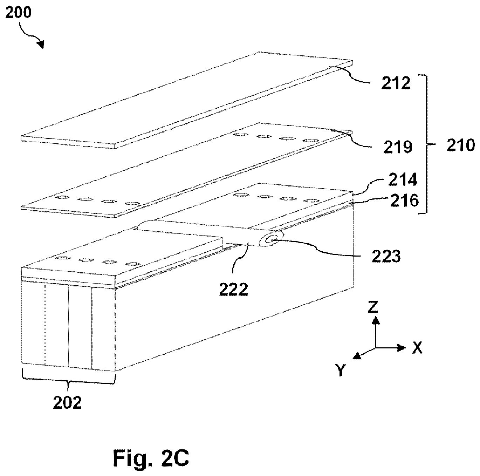

In some aspects, each of the sub-channels 221A, 221B, 221C, 221D corresponds to a hole in the first layer 216 and corresponding vent 206 in a cell. The sub-channels 221 feed into main tube portion 222. With reference to Figure 2C, the communication between a vent 206, sub-channel 221, main tube portion 222, and exit port 223 form an exit pathway so that ejecta is directed to a safe location.

In one aspect, the tube 220 is monolithic, such as a casting, although the invention is not so limited. Other aspects may include separate sub-channels 221 that are screwed or otherwise attached to the main channel port 222.

In one aspect the tube 220 is formed from a fire resistant material. Aspect materials include, but are not limited to, ceramic, mica, resin, polymer, metal, carbon materials, , and combinations thereof. Metals that may be used for tube 220 include stainless steel or titanium, which has the advantage of a high melting point, and high corrosion resistance. In one aspect, the first layer 216 is an aerogel blanket, the second layer 214 is a foam material, and the third layer 212 is a mica plate. In one aspect, the first layer 216 is an aerogel blanket, the second layer 214 is a foam material, the third layer 212 is an aerogel plate, and the tube 220 is selected from a mica pipe, a stainless-steel pipe, or an aluminum pipe.

Figure 2B is a cross-sectional view of a battery module 200 cutting along the center line of the tube 220 in X direction. During a destructive event (e.g., thermal runaway), battery cells 202 may be disturbed and release ejecta from the vents 206 in Z direction. The ejecta is directed to the corresponding sub-channels 221A, 221B, 221C, 221D (collectively 221) aligned with the vents 206. The ejecta is then re-directed to the main channel port 222 in X direction and exits from the exit port 223 subsequently. As such, the tube 220 contains the ejecta and directs it through the multiple cover layers 210 and away from sensitive portions of the battery pack and away from the passenger compartment above (Z direction) the battery pack.

Figure 2C is a perspective view of a partially assembled form of the battery module 200. The tube 220 is located within the second layer 214. In the aspect shown, the main channel port 222 is thinner or equal to a thickness of the second layer 214. An additional layer 219 is further shown in Figure 2C. The additional layer 219 separates the tube 220 from electrical cables (not shown) placed between the additional layer 219 and the third layer 212. The electrical cables connect the terminals 204 for charging and discharging the battery and collect battery testing data.

### C. Multiple Cover Layer(s) with Electrical Connectors

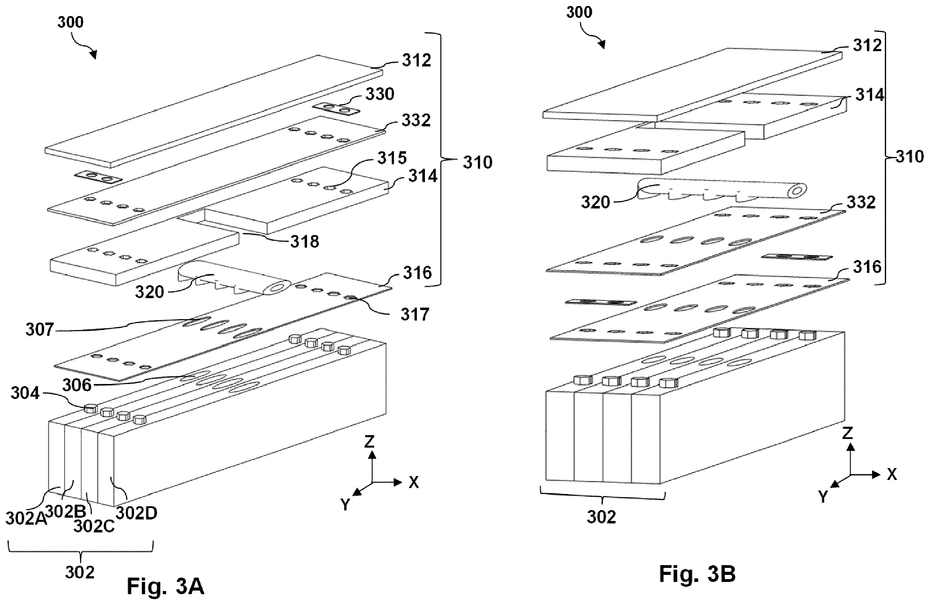

Figure 3A illustrates an example battery module 300 that includes many of the same elements described above in the context of battery modules 100 and 200, with the exception that the multiple cover layers 310 of the battery module 300 includes an additional (e.g., fourth) cover layer 332 between a first layer and a third layer. This fourth cover layer 332 separates the channel and electrical components. The fourth cover layer 332 provides additional protection to electrical components associated with the battery by blocking thermal runaway ejecta.

In the example shown, the battery module 300 includes a stack of cells 302 of battery cells 302A, 302B, 302C, and 302D (collectively 302A-302D). The battery module 300 includes a multiple cover layer 310. The multiple cover layer 310 includes a first layer 316, a second layer 314, a third layer 312, and a fourth layer 332. The battery module 300 also includes a tube 320.

The battery cells 302A-302D in Figure 3A each includes corresponding an electrical terminal 304 and a vent 306. The electrical terminals 304 and vents 306 are analogous to those described above and the above description is equally applicable to these structures in the battery module 300.

As described above, the battery cells 302A-302D may be lithium ion battery cells, although aspects of the present disclosure are applicable independent of battery chemistry or battery configuration.

As with the battery modules 100 and 200, the battery module 300 includes a multiple cover layers 310. As with the previously described multiple cover layers 110 and 210 in aspects of Figures 1A-2B, the multiple cover layers 310 includes a first layer 316, a second layer 314, and a third layer 316. As with its analog layers 116 and 216 described above in the context of battery modules 100 and 200, the first layer 316 may optionally include holes 317 configured and dimensioned to align with electrical terminals 304. The first layer 316 may optionally include vent holes 307 configured and dimensioned to align with vents 306. The configuration and function of the holes 317 and vent holes 307 in the first layer 316 are analogous to the function and reasons for these structures described in the context of battery modules 100 and 200.

The second layer 314, as with its analog layers 114 and 214 described above in the context of battery modules 100 and 200, may optionally include holes 315 to accommodate terminals 304. As also described above in analogous layers 114 and 214, the second layer 314 defines channel 318.

A third layer 312 is shown that does not include any holes. Similar to the third layer 212 in the aspects shown in Figures 2A-2C, the third layer 312 protects components adjacent to the battery module 300 from damages of the thermal runaway ejecta of the battery cells 302.

Similar to aspects of the multiple cover layers 110 and 210 in aspects of Figures 1A-2B above, the multiple cover layers 310 are all the same material in one aspect. In one aspect, the multiple cover layers 310 include more than one material for different layers. Layers adjacent to the channel 318 may be thermally insulating layers, to prevent heat transfer from the thermal runaway ejecta in the channel 318 or tube 320 to adjacent components, e.g., the battery cells 302. In one aspect, one or more multiple cover layers 310 includes an aerogel layer. Other layers may include structural materials, such as polymers, or metals such as stainless steel. Resilient material layers may be included in the multiple cover layers 310. Multiple cover layers 310 may be connected, in one aspect by glue, stitching, taping, heat pressing, other suitable connecting method, and combinations thereof.

In the aspect of Figure 3A, a tube 320 is included as a separate component included within multiple cover layers 310. In other words, the tube 320 is not a part of the multiple cover layers 310. The tube 320 fits within the channel 318 of the second layer 314. In one aspect the tube 320 is formed from a fire resistant material. Aspect materials include, but are not limited to, mica, metal, etc.

The aspects of Figure 3A further include electrical connector 330. The electrical connector 330 couples multiple terminals 304 together for further connection to device circuitry, electric motors, etc.

In the aspect of Figure 3A, a fourth layer 332 is further included between the second layer 314 and the electrical connectors 330 to protect the electrical connector 330 from heating during thermal runaway. In the case of thermal runaway, the heat of the ejecta may transfer heat to the tube 320 and elevate the surface temperature of the tube 320. The elevated surface temperature may damage the electrical connectors 330. The fourth layer 332 between the tube 320 and the electrical connector 330 separates the hot surface of the tube 320 away from the electrical connector 330.

The fourth layer 332 includes materials that provide suitable heat, fire, and electrical resistance. The fourth layer 332 may include materials similar to the first layers 116, 216 and 316 described above in the context of battery modules 100, 200 and 300. In one aspect, the fourth layer 332 includes an aerogel layer.

Figure 3B provides alternative arrangement of layers of the multiple cover layers 310. In one aspect, the electrical connector 330 is optionally positioned between the first layer 316 and the second layer 314. The fourth layer 332 is accordingly disposed between the first layer 316 and the second layer 314 to separate the channel 318 (and the tube 320 disposed therein) and the electrical connectors 330. It is advantageous to have a layer on at least one side of the electrical connectors 330 to provide heat, fire, and/or dielectric isolation of the electrical connectors 330.

### D. Cover Layers and Other Electrical Components

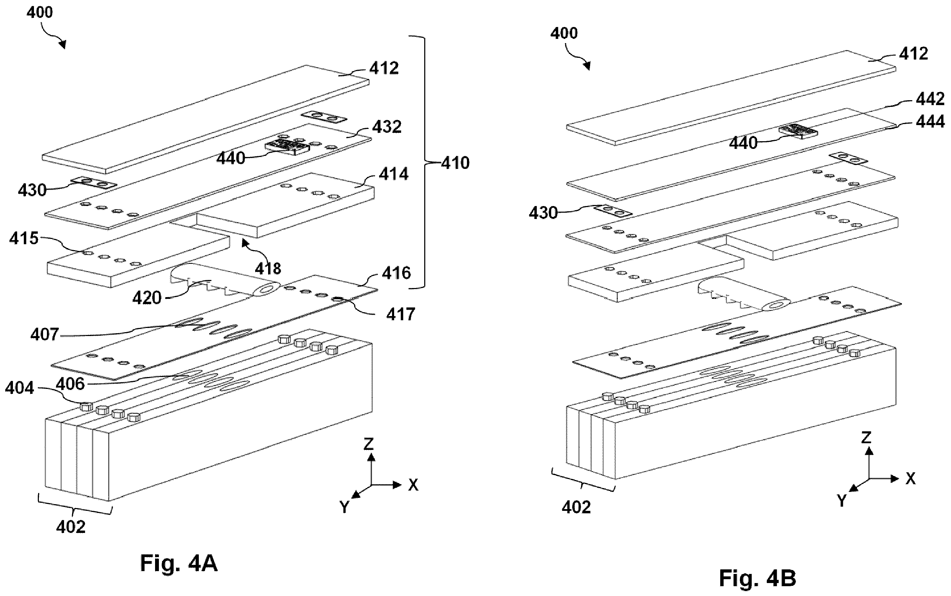

Figure 4A illustrates an example battery module 400 that includes many of the same elements described above in the context of battery modules 100, 200, and 300, with the exception that the battery module 400 includes a battery management circuit 440 integrated with a multiple cover layers 410. The multiple cover layers 410 protect the battery management circuit 440 in the event of thermal runaway.

In the example shown, the battery module 400 includes a stack of battery cells 402, a multiple cover layers 410 over the battery cells 402, a tube 420 and electrical connectors 430 embedded in the multiple cover layers 410. The battery module 400 further includes a battery management circuit 440. Similar to the multiple cover layers 110, 210, and 310, the multiple cover layers 410 includes a first layer 416, a second layer 414, a third layer 412, and a fourth cover layer 432. The components of the battery module 400 are explained in detail below.

The module 400 includes a stack of battery cells 402, such as lithium ion cells. The cells 402 in Figure 4A each includes an electrical terminal 404. In the aspect of Figure 4A, a vent 406 is included on each cell 402 in the stack. Multiple cover layers 410 are included over a side of the stack of lithium-ion cells that includes the electrical terminals 404. A first layer 416 is shown with holes 417 to accommodate terminals 404. Vent holes 407 are also included in the first layer 416 that align with the vents 406 of the cells 402. A second layer 414 is further shown that also includes holes 415 to accommodate terminals 404. A channel 418 is defined in the second layer 414. A third layer 412 is shown that does not include any holes.

Similar to aspects above, in one aspect, the multiple cover layers 410 are all the same material. In one aspect, the multiple cover layers 410 include more than one material for different layers. Layers adjacent to the channel 418 may be thermally insulating layers, to facilitate adjacent heated components. In one aspect, one or more multiple cover layers 410 includes an aerogel layer. Other layers may include structural materials, such as polymers, or metals such as stainless steel. Resilient material layers may be included in the multiple cover layers 410. Multiple cover layers 410 may be connected, in one aspect by glue, stitching, taping, heat pressing, etc. In one aspect, the first layer 416 and the fourth layer 432 includes aerogel, such as aerogel plate, fiber reinforced aerogel blanket, other aerogel containing layers, or combinations thereof. In one aspect, the second layer 414 is a resilient layer, such as foam, fiber, resin, polymer, other materials that provide resilient, and the combinations thereof. In one aspect, the third layer 412 is a rigid layer, such as a stainless steel, aluminum, mica, other rigid layers, and combinations thereof.

In the aspect of Figure 4A, a tube 420 is included that is a separate component included within multiple cover layers 410. In other words, the tube 420 is not a part of the multiple cover layer 410. The tube 420 fits within the channel 418 of the second layer 414. In one aspect the tube 420 is formed from a fire or heat resistant material. Aspect materials include, but are not limited to, mica, metal, other fire or heat resistant materials, and combinations thereof.

Electrical connectors 430 are further shown, to couple multiple terminals 404 together for further connection to device circuitry, electric motors, etc. In the aspect of Figure 4A, a fourth layer 432 is included between the second layer 414 and the electrical connectors 430.

In the aspect of Figure 4A, the battery management circuit 440 is located between one or more of the multiple cover layers 410. Functions of a battery management circuit include, but are not limited to, temperature measurement and electrical feedback adjustments in response to temperature. Other electrical feedback adjustments may be made in response to other measured metrics, such as voltage, current, pressure sensing, moisture sensing, etc. In the aspect in Figure 4A, the battery management circuit 440 may communicate to other circuitry wirelessly, or through wires.

The battery management circuit 440 may be embedded between the same layers (e.g., between the third layer 412 and the fourth layer 432) as the electrical connectors 430 shown in Figure 4A. Alternatively, the battery management circuit 440 may be separated from the electrical connectors 430 by one or more layers of the multiple cover layer 410 as explained below with respect to Figure 4B.

In Figure 4B, the battery management circuit 440 is embedded in the multiple cover layers 410 separated from the electrical connectors 430 by at least one of the layers in the multiple cover layers 410. The battery management circuit 440 with wire 442 that is used for at least some communication with external circuity. Figure 4B further illustrates an optional separate circuit board 444 to hold the battery management circuit 440. The circuit board 444 may further include sensors such as temperature, moisture, pressure, etc. The battery management circuit 440 with sensors, cables, and other components can be embedded in the multiple cover layers 410. The battery management circuit 440 with sensors, cables, and other components are separated with the channel 418 and the tube 320 by one or more of the layers in the multiple cover layers 410.

### E. Housing for the battery module including venting channel embedded in the multiple cover layers

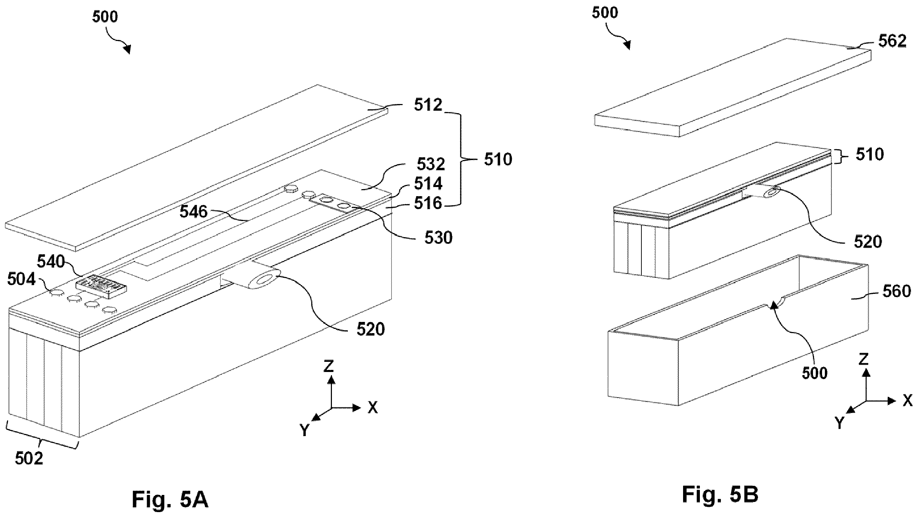

Figure 5A shows a semi-assembled battery module 500 with the third layer 512 not assembled. Different from Figures 4A-4B, the battery management circuit 540 is wired instead of the wireless battery management circuit 440 in the aspects of Figures 4A and 4B. The wired battery management circuit 540 includes trace circuits 546. Additional electronic elements and connections (not shown) may be embedded in multiple cover layers 510 along with a battery management circuit 540.

The battery module 500 in Figure 5A includes a stack of battery cells 502, multiple cover layers 510 over the battery cells 502, a tube 520 and electrical connectors 530 embedded in the multiple cover layers 510. This is similar to the battery modules 100, 200, 300 and 400 illustrated above. In addition, the battery module 500 further includes trace circuits 546 to wire the battery management circuit 540 with the cell connectors 530 and the terminals 504.

Different from the wireless battery management circuit 440 in the aspects of Figures 4A-4B, the wired battery management circuit 540 may be electronically connected to the battery cell with wires. The battery management circuit 540 can therefore be powered by battery cells 502. The wired battery management circuit 540 has smaller volume and longer serving time because it does not require built-in battery as the wireless battery management circuit 440 does. The battery management circuit may connect the battery cells 502 by trace circuits 546 to monitor electrical characteristics of the cells, or to transmit information from other sensors (not shown) such as current, voltage, temperature, pressure, moisture.

Figure 5B shows a battery module 500 similar to other battery modules described above, but further includes a housing box 560, and a housing lid 562. In one aspect, these housing components 560, 562 are separate from other layers (e.g., multiple cover layers 510) described and included in the battery module 500. In other words, the housing components 560 and 562 are not parts of the multiple cover layers 510. In one aspect, the stack of layers 510 on the battery module 500 includes a fire resisting cushion that is resilient (e.g., the second layer 514). The multiple cover layers 510 acts to take up space between the battery module 500 and the housing lid 562, which may reduce vibrations and noise, while also providing a level of thermal insulation and thermal runaway protection. In one aspect, the stack of layers 510 embeds the terminals of the battery cells, electrical connectors, battery management circuit, and a majority portion of the tube 520. The tube 520 directs the thermal runaway ejecta to outside of the housing box 560 through a dent 564 on a sidewall of the housing box 560.

### F. Venting channel embedded in multiple cover layers for battery pack

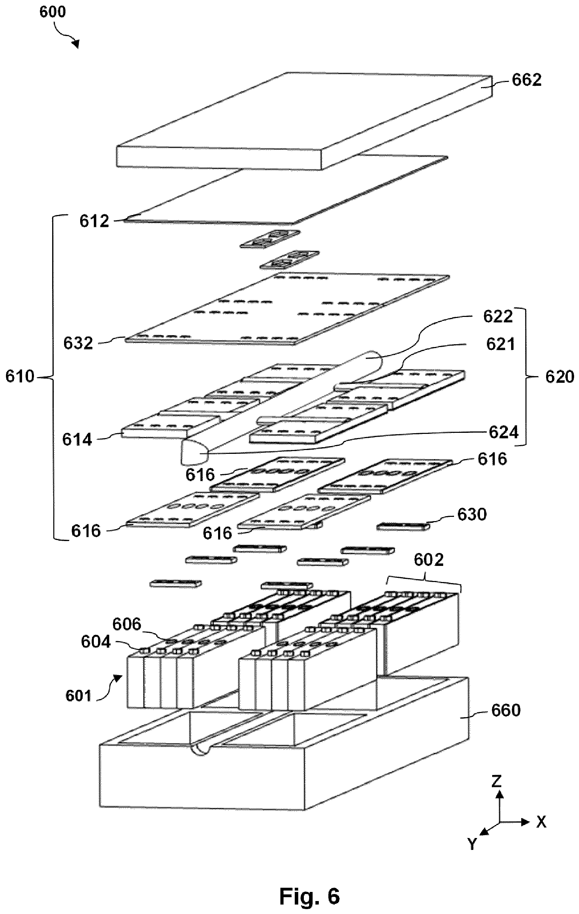

Figure 6 shows one aspect of a battery pack 600. The battery pack 600 includes multiple battery modules 601 sharing one or more layers of the multiple cover layers 610. The multiple cover layers 610 further embeds a branched tube 620. Sharing one or more layers of the multiple cover layers 610 among the modules 601 of a pack 600 saves pack space, increases the pack efficiency, and is easier to assemble. The branched tube 620 provides an advantage of added design flexibility to further redirect any venting gasses or flames away from critical components or unwanted regions. The branched tube 620 also provides one venting solution that consolidates larger numbers of cells in multiple modules.

The battery pack 600 includes multiple battery modules similar to other battery modules described in the present disclosure, each module 601 includes a stack of battery cells, such as lithium ion cells 602. The cells 602 each includes electrical terminals 604. In the aspect of Figure 6, a vent 606 is included on each cell in the stack. Multiple cover layers 610 are included over a side of the stack of lithium-ion cells 602 that includes the electrical terminals 604. A first layer 616 is shown with holes to accommodate terminals 604. A second layer 614 is further shown that also includes holes to accommodate terminals 604. Multiple portions of the second layer 614 leave space for a branched tube 620. A third layer 612 is shown that does not include any holes. Electrical connectors 630 are included to couple together numbers of terminals 604. The battery pack 600 also includes a housing box 660 and a housing lid 662 analogous to the housing box 560 and the housing lid 562 of the aspects in Figures 5A-5B.

Different from the aspects described with respect to Figures 1A-5B, the aspects of Figure 6 include multiple battery modules 601 that share one or more of the multiple cover layers 610. In one aspect, the battery pack 600 includes four battery modules 601. Each of the battery modules 601 has its own first layer 616 and second layer 614. In one aspect, all of the battery modules 601 share the third layer 612 and the fourth layer 632.

Individual first layer 616 and second layer 614 for each battery module 601 provides a space for the branched tube 620 and enables easier alignments to the terminals 604, vents 606 and tube 620 during assembling of the battery pack 600. It also enables individual replacement of the first layer 616 and second layer 614 for each battery module 601. On the other hand, it is possible to use shared third layer 612 and fourth layer 632 because there are less components (e.g., electrical connectors 630 and tube 620) needed to be integrated into these two layers. The shared third layer 612 and fourth layer 632 provide easier installation option when it is possible.

The aspects of Figure 6 further include a branched tube 620 to accommodate the multiple modules in the battery pack 600. The branched tube 620 is different from the tubes 220, 320, 420, and 520 described above with respect to Figures 2A-5B. The branched tube 620 includes a number of sub-channels 621 that feed into a trunk 622. The sub-channels 621 are analogous to the tube 220, 320, 420, and 520 in Figures 2A-5B. In the aspect shown, the trunk 622 is configured to redirect venting gases from a vent direction (e.g., Z direction) to a first channel direction (e.g., Y direction). In Figure 6, the first channel direction is parallel to the length of the trunk 622, which is perpendicular to the vents 606. In one aspect, the branched tube 620 further includes a redirect end 624 that further changes a direction of venting gasses from along the trunk 622 (e.g., Y direction) to a second channel direction (e.g., negative Z direction). In the aspect shown, the second channel direction is perpendicular to the first channel direction, and is downward (e.g., negative Z direction), although the invention is not so limited.

In one aspect, the branched tube 620 includes material that is the same as the tube 220, 320, 420, and 520 in Figures 2A-5B. In one aspect, the branched tube 620 includes materials selected from, but is not limited to, metals, mica, other flame and/or heat resistant materials, and combinations thereof.

### G. Alternative venting channel configurations for battery modules venting towards sidewalls of the housing

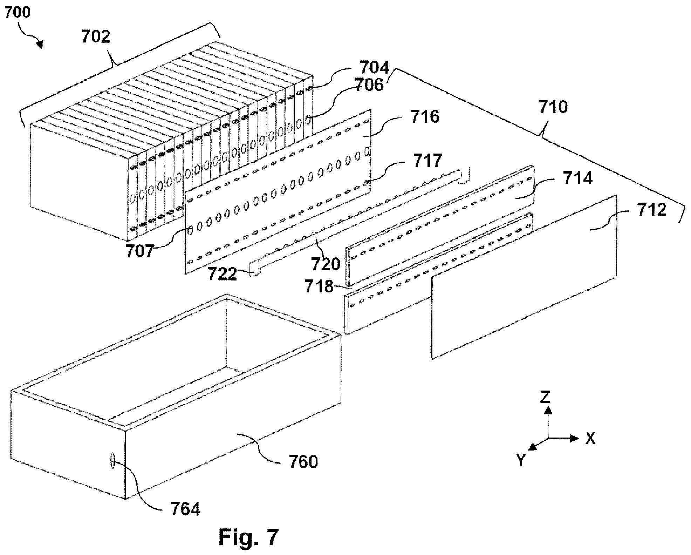

Figure 7 shows one aspect of a battery module 700. The multiple cover layers 710 is disposed between the battery cells 702 and a side wall of the housing 760, instead of between the battery cells and the housing lid illustrated in aspects of Figures 1A-6.

Similar to the aspects of Figures 1A-6, the module 700 includes a stack of battery cells 702, such as lithium ion cells. The cells 702 in Figure 7 each include an electrical terminal 704 and a vent 706. Multiple cover layers 710 are included over a side of the stack of lithium-ion cells that includes the electrical terminals 704 and the vents 706. The module 700 further includes a tube 720 embedded in the multiple cover layers 710. The cells 702, the multiple cover layers 710 and the tube 720 are contained in a module housing 760.

The multiple cover layers 710 includes a first layer 716, a second layer 714, and a third layer 712. The first layer 716 is shown with holes 717 to accommodate terminals 704. Vent holes 707 are also included in the first layer 716 that align with the vents 706 of the cells 702. A second layer 714 is further shown that also includes holes aligned with and to accommodate terminals 704. In the aspect of Figure 7, the second layer 714 includes multiple separate pieces that are arranged on a common level within the multiple cover layers 710. The multiple (e.g., two) separate pieces of the second layer 714 defined a channel 718 therebetween. The channel 718 spans across a length of the second layer 714 and separated the second layer 714 into two pieces. A third layer 712 is shown that does not include any holes.

Similar to aspects of the multiple cover layers 110, 210, 310, 410, 510, and 610 described in Figures 1A-6, the multiple cover layers 710 are all the same material in one aspect. In another aspect, the multiple cover layers 710 include more than one material for different layers. Layers adjacent to the channel 718 may be thermally insulating layers, to facilitate adjacent heated components. In one aspect, one or more layers of the multiple cover layers 710 includes an aerogel layer. Other layers (e.g., the third layer 712) may include structural materials, such as polymers, or metals such as stainless steel. Resilient material layers (e.g., the second layer 714) may be included in the multiple cover layers 710. Multiple cover layers 710 may be connected by glue, stitching, taping, heat pressing, other connection method, or combinations thereof. In one aspect, the first layer 716, the second layer 714, and the third layer 712 are an aerogel layer, a resilient layer, and a rigid layer, respectively.

In the aspects of Figure 7, a tube 720 is included that is a separate component included within multiple cover layers 710. In other words, the tube 720 is not part of the multiple cover layer 710. The tube 720 fits into the channel 718 of the second layer 714. The tube 720 is analogous to the tubes 220, 320, 420, 520, 621 in the aspects of Figures 1A-6, with the exception that the tube 720 has angled turns 722 at both ends instead of on one ends of the tube.

In the aspect of Figure 7, the tube 720 includes angled turns 722 at either or both ends of the tube 720. The angled turns 722 directs thermal runaway ejecta to a desired direction away from critical components and/or users of the equipment. The desired direction includes the bottom of an electric vehicle, which is the negative Z direction in the aspect of Figure 7. In the aspect of Figure 7, the housing 760 includes openings 764 where the angled turns 722 pass through the housing 760. Having two angled turns 722 adds additional removal of hot gasses and flames to an outside of the housing 760, compared to the single angled turn configuration in the aspects of Figures 2A-6.

In one aspect the tube 720 is formed from a material the same as the materials of the tubes 220, 320, 420, 520, 621 in the aspects of Figures 2A-6. In one aspect, the tube 720 includes a material selected from a fire resistant material and/or heat resistant material. In one aspect, the tube 720 includes a material selected from aerogel material, aerogel blanket, mica, metal, other fire and/or heat resistant materials, and combinations thereof.

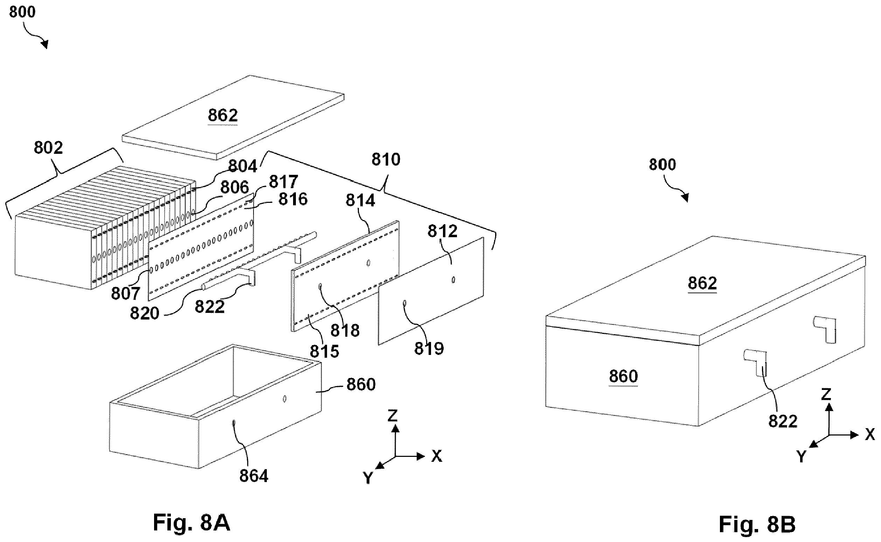

Figure 8A shows one aspect of a battery module 800. The angled turns 822 in battery module 800 locates at the middle portion of the tube 820. The position of the angled turns 822 being in the middle reduces the travel length of the venting gas in the tube 820, comparing to the travel length illustrated in Figure 7 where the angled turns 722 are positioned at the end of the tube 720.

Analogous to the modules 100, 200, 300, 400, 500, 601, and 700 in the aspects of Figures 1A-7, the module 800 includes a stack of battery cells 802 and a multiple cover layers 810 over a side of the stack of battery cells 802. The module 800 also includes a tube 820, a housing box 860 and a housing lid 862.

In one aspect, the stack of battery cells 802 may include lithium ion cells. The stack of battery cells 802 may each include electrical terminals 804 and a vent 806. The vent 806 is to release the cell pressure and materials produced in abuse conditions, such as thermal runaway.

In one aspect, the multiple cover layers 810 includes a first layer 816, a second layer 814, and a third layer 812. The first layer 816 is shown with holes 817 to accommodate terminals 804. Vent holes 807 are also included in the first layer 816 that align with the vents 806 of the cells 802. A second layer 814 is further shown that also includes holes 815 to accommodate terminals 804. Multiple channel holes 818 are included in the second layer 814. A third layer 812 is shown that also includes channel holes 819 aligned with the channel holes 818. The tube 820 pass through the second layer 814 and the third layer 812 through the channel holes 818 and 819.

In one aspect, the multiple cover layers 810 includes material analogous to the materials included in the multiple cover layers 110, 210, 310, 410, 510, 610, and 710 in the aspects of Figures 1A to 7B. In one aspect, the multiple cover layers 810 include more than one material for different layers. Layers adjacent to the tube 820 and the channel holes 818 may be thermally insulating layers, to facilitate adjacent heated components. In one aspect, one or more multiple cover layers 810 includes an aerogel layer. Other layers may include structural materials, such as polymers, or metals such as stainless steel. Resilient material layers may be included in the multiple cover layers 810. Multiple cover layers 810 may be connected by glue, stitching, taping, heat pressing, other connecting method, and combinations thereof. In one aspect, the first layer 816, the second layer 814, and the third layer 812 are an aerogel layer, a resilient layer, and a rigid layer, respectively.

In the aspect of Figures 8A-8B, the multiple cover layers 810 embeds a tube 820. The tube 820 includes one or more angled turns 822. The angled turns 822 are positioned in a middle portion of the tube 820 to reduce the travel length of the venting gas in the tube 820. The angled turns 822 are directed to a desired direction that is away from critical components and/or users of the equipment. The desired direction includes the bottom of an electric vehicle, which is the negative Z direction in the aspects of Figures 8A-8B.

In one aspect, the tube 820 includes materials analogous to the materials included in the tubes 220, 320, 420, 520, 621, and 720 in the aspects of Figures 2A-7. In one aspect, the tube 820 is formed from a fire and/or heat resistant material. In one aspect, the tube 820 includes, but is not limited to, aerogel plate, mica, metal, other suitable materials, and combinations thereof.

In the aspects of Figures 8A-8B, the module 800 further includes a housing box 860 and a housing lid 862 to hold the cells 802. The housing box 860 includes openings 864 on a sidewall where the angled turns 822 pass through the housing box 860. The openings 864 enables the angled turns 822 to pass through the sidewall of the housing box 860 to shorten the exit way of the possible thermal runaway ejecta.

Figure 8B shows an assembled battery module 800 with the angled turns 822 protruding from the housing box 860 and angled downward. The angled turns 822 redirects ejecta outside the housing box 860 to avoid propagation or explosion of the battery module 800 in the housing box 860. The angled turns 822 redirects the ejecta downward (negative Z direction) to avoid any injury or damage to adjacent cars or persons above (e.g., in Z direction) or next to (e.g., in X or Y direction) the module 800.

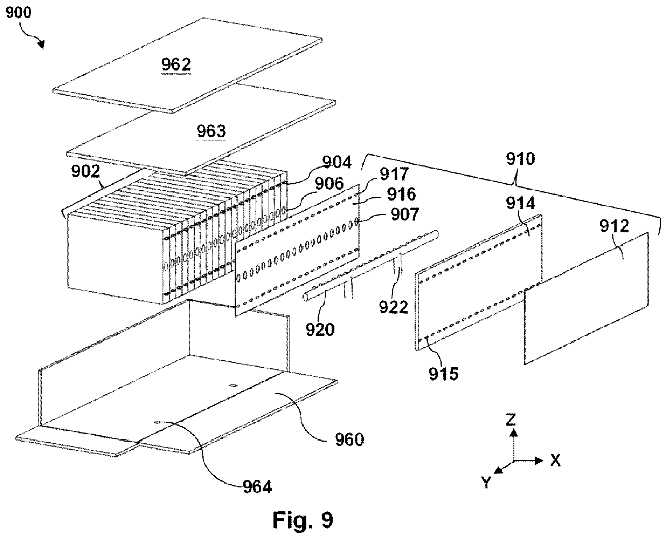

Figure 9 shows one aspect of a battery module 900. The battery module 900 includes a tube 920 that directs the venting gas directly to the bottom direction (e.g., negative Z direction) through the ports 922. This is different from the aspects illustrated in Figures 8A-8B, where the tube 820 directs the venting gas to the side and then to the bottom direction of the battery module through the angled turns 822.

Analogous to the modules 100-800 in the aspects of Figures 1A-8B, the module 900 includes a stack of battery cells 902, such as lithium ion cells. The cells 902 in Figure 9 each include an electrical terminal 904 and a vent 906. The battery module 900 includes a multiple cover layers 910 over a side of the stack of lithium-ion cells that includes the electrical terminals 904. The multiple cover layers 910 embeds a tube 920. The battery module also includes a housing box 960 and a housing lid 962. In one aspect, an additional resilient layer 963 is included between the cells 902 and the lid 962.

Similar to the multiple cover layers 110-810 in aspects of Figures 1A-8, the multiple cover layers 910 include a first layer 916, a second layer 914 and a third layer 912. The first layer 916 include holes 917 to accommodate terminals 904. Vent holes 907 are also included in the first layer 916 that align with the vents 906 of the cells 902. A second layer 914 is further shown that also includes holes 915 to accommodate terminals 904. A third layer 912 is shown that does not include channel holes.

In one aspect, the multiple cover layers 910 include materials analogous to the multiple cover layers 110-810 in aspect of Figures 1A-8. In one aspect, all of the multiple cover layers 910 are the same material. In one aspect, the multiple cover layers 910 include more than one material for different layers. Layers adjacent to the tube 920 (e.g., the first layer 916 and the second layer 914) may be thermal insulating layers to facilitate adjacent heated components (e.g., the tube 920). In one aspect, one or more of the multiple cover layers 910 includes an aerogel layer. Other layers may include structural materials, such as aerogel plate, polymers, or metals such as stainless steel. Resilient material layers may be included in the multiple cover layers 910. Multiple cover layers 910 may be connected, in one aspect by glue, stitching, taping, heat pressing, other suitable method of connecting, and combinations thereof. In one aspect, the first layer 916 is an aerogel layer, the second layer 914 is a resilient layer, and the third layer 912 is a rigid layer.

In the aspect of Figure 9, a tube 920 is included that is a separate component included within multiple cover layers 910. In other words, the tube 920 is not a part of the multiple cover layers 910. In the aspect of Figure 9, the tube 920 includes one or more ports 922. The ports 922 are directed to a desired direction ( e.g., the bottom of an electric vehicle, negative Z direction) that is away from critical components and/or users of the equipment. The ports 922 directs the venting gas straight to the desired direction without turns. Comparing to the angled turns 822 in Figures 8A-8B, the thermal runaway ejecta exit the straight ports 922 more efficiently than the angled turns 822, thereby provides improved safety.

In one aspect, the tube 920 includes materials the same as the materials in the tube 220, 320, 420, 520, 621, 720, and 820. In one aspect the tube 920 is formed from a fire and/or heat resistant material. In one aspect, the tube 920 includes materials selected from aerogel, mica, metal, other suitable materials, and combinations thereof.

The module 900 further includes a housing box 960 and a housing lid 962 to hold the cells 902, the multiple cover layers 910, and the tube 920. In the aspect of Figure 9, the housing box 960 includes openings 964 where the ports 922 pass through the bottom wall of the housing box 960. This adds additional removal of hot gasses and flames to an outside of the housing box 960. The openings 964 facilitate the straight ports 922 and the thermal runaway ejecta to exit the housing box 960. In one aspect, the module 900 further includes an additional resilient layer 963. The additional resilient layer 963 provides cushion for the battery cells 902 from mechanical damages in abuse conditions (e.g., collision, explosion, and thermal runaway). In one aspect, the additional resilient layer 963 is an aerogel layer.

### H. Top view, side view, and layer by layer views of the multiple cover layers with embedded venting channel

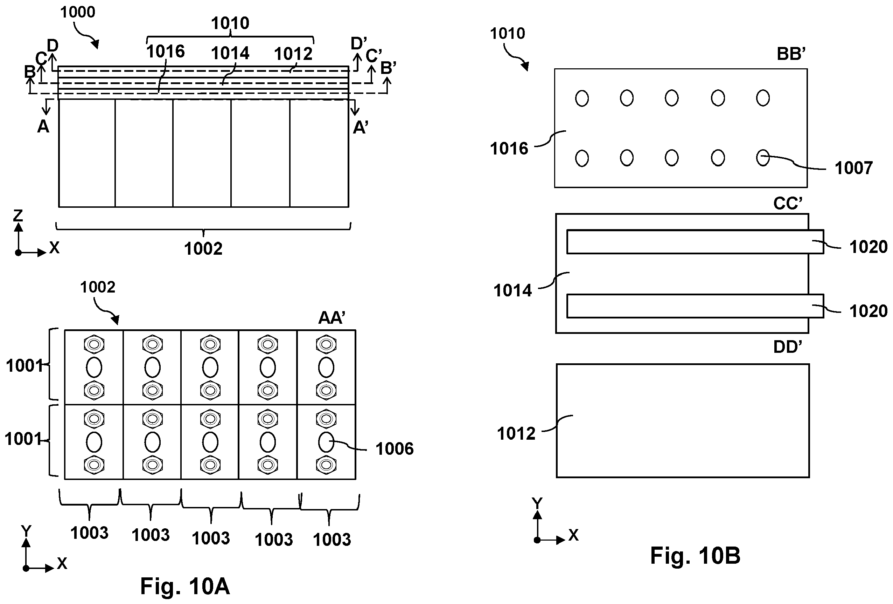

Figure 10A shows one aspect of a battery module 1000. The battery module 1000 is analogous to the battery module 100-900 in aspects of Figures 1A-9, except the battery module 1000 includes battery cells arranged in multiple rows 1001 and multiple columns 1003. The battery module 1000 demonstrates the flexibility of the multiple cover layers 1010 and the channel 1020 in battery modules of different cell arrangements.

The module 1000 includes multiple battery cells 1002, such as lithium ion cells. The cells 1002 in Figure 10A each include electrical a terminal 1004 and a vent hole 1006. Multiple cover layers 1010 are included over a side of the multiple cells that includes the electrical terminals 1004. In the aspect of Figures 10A-10B, the cells 1002 are arranged into multiple rows 1001 and columns 1003.

Similar to the multiple cover layers 110-910 in aspects of Figures 1A-9, the multiple cover layers 1010 includes a first layer 1016, a second layer 1014, and a third layer 1016. The multiple cover layers 1010 may additionally include structural materials, such as polymers, or metals such as stainless steel. Resilient material layers may be included in multiple cover layers 1010. Multiple cover layers 1010 may be connected, for example by glue, stitching, taping, heat pressing, other suitable methods, and combinations thereof.

In one aspect, the multiple cover layer 1010 includes the same material as the multiple cover layers 110-910 in aspect of Figures 1A-9. In one aspect, the multiple cover layers 1010 are all the same material. In one aspect, the multiple cover layers 1010 include more than one material for different layers. In one aspect, one or more multiple cover layers 1010 includes an aerogel layer. In one aspect, the first layer 1016 is an insulation layer (e.g., an aerogel layer), the second layer 1014 is a resilient layer, and the third layer is a rigid layer.

Figure 10B shows cross sectional views of Figure 10A along a center line BB' of the first layer 1016, along a center line CC' of the second layer 1014, and along a center line DD' of the third layer 1012. The first layer 1016 includes holes 1007 positioned in multiple rows and columns that align with vent holes 1006 of the cells 1002. In the second layer 1014, multiple channels 1020 are included to align with the multiple rows 1001 of the cells 1002. Aspects of materials and configurations suitable channels 1020 are included in other aspects described in the present disclosure. A third layer 1012 is further shown without any holes.

### I. Method of forming a battery module with venting channel embedded in multiple cover layers

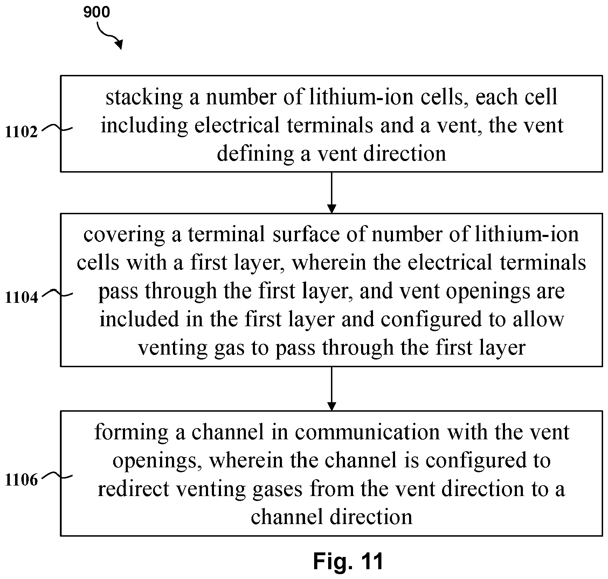

Figure 11 shows an aspect flow diagram of a method 1100 of forming a battery module. In operation 1102, a number of lithium-ion cells are stacked, each cell including electrical terminals and a vent, the vent defining a vent direction. In operation 1104, a terminal surface of number of lithium-ion cells is covered with a first layer, wherein the electrical terminals pass through the first layer, and vent openings are included in the first layer and configured to allow venting gas to pass through the first layer. In operation 1106, a channel is formed in communication with the vent openings, wherein the channel is configured to redirect venting gases from the vent direction to a channel direction.

### J. Power battery systems with battery modules including venting channel embedded in multiple cover layers

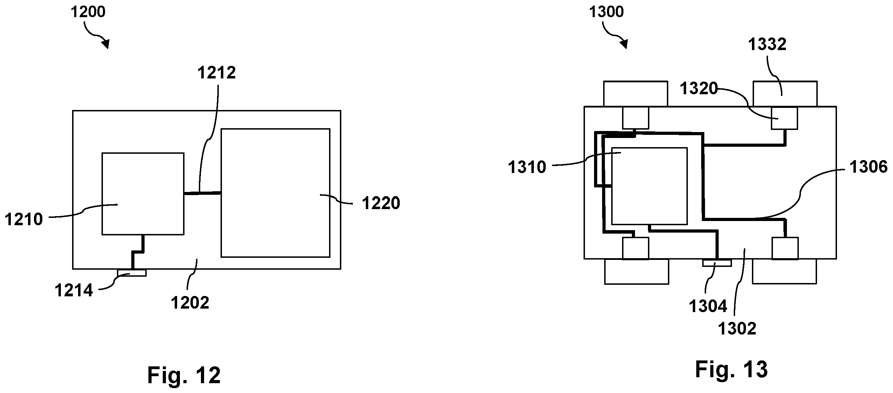

Battery modules as described above are used in a number of electronic devices. Figure 12 illustrates an aspect electronic device 1200 that includes a battery module 1210. The battery module 1210 is coupled to functional electronics 1220 by circuitry 1212. In the aspect shown, the battery module 1210 and circuitry 1212 are contained in a housing 1202. A charge port 1214 is shown coupled to the battery module 1210 to facilitate recharging of the battery module 1210 when needed.

In one aspect, the functional electronics 1220 include devices such as semiconductor devices with transistors and storage circuits. Aspects include, but are not limited to, telephones, computers, display screens, navigation systems, etc.

Figure 13 illustrates another electronic system that utilizes battery modules that include multilayer thermal barriers as described above. An electric vehicle 1300 is illustrated in Figure 13. The electric vehicle 1300 includes a chassis 1302 and wheels 1322. In the aspect shown, each wheel 1322 is coupled to a drive motor 1320. A battery module 1310 is shown coupled to the drive motors 1320 by circuitry 1306. A charge port 1304 is shown coupled to the battery module 1310 to facilitate recharging of the battery module 1310 when needed.

Aspects of electric vehicle 1300 include, but are not limited to, consumer vehicles such as cars, trucks, etc. Commercial vehicles such as tractors and semi-trucks are also within the scope of the invention. Although a four wheeled vehicle is shown, the invention is not so limited. In one aspect, two wheeled vehicles such as motorcycles and scooters are also within the scope of the invention.

### Aspects

To better illustrate the method and apparatuses disclosed herein, a non-limiting list of various aspects is provided here:
Aspect 1 includes a battery module. The battery module includes a stack of lithium-ion cells, each cell including electrical terminals, a vent on each cell of the stack of lithium-ion cells, each vent defining a vent direction, and at least one channel in communication with the vents from the stack of lithium-ion cells, wherein the channel is configured to redirect venting gases from the vent direction to a channel direction.
Aspect 2 includes the battery module of Aspect 1, further including multiple cover layers located over a side of the stack of lithium-ion cells that includes the electrical terminals, wherein the electrical terminals pass through openings in one or more of the multiple layers.
Aspect 3 includes the battery module of any one of Aspects 1-2, wherein one or more layers of the multiple cover layers includes an aerogel.
Aspect 4 includes the battery module of any one of Aspects 1-3, further including a battery management circuit located in one or more of the multiple cover layers.
Aspect 5 includes the battery module of any one of Aspects 1-4, wherein the channel is defined by one or more spaces in the multiple cover layers.
Aspect 6 includes the battery module of any one of Aspects 1-5, wherein the channel is filled with a sacrificial material.
Aspect 7 includes the battery module of any one of Aspects 1-6, wherein the channel is a separate component included within multiple layers.
Aspect 8 includes an electric vehicle. The electric vehicle includes a vehicle chassis, a plurality of wheels coupled to the vehicle chassis, the plurality of wheels driven by one or more electric motors and a battery module connected to the one or more electric motors. The battery module includes a stack of lithium-ion cells, each cell including electrical terminals, a vent on each cell of the stack of lithium-ion cells, each vent defining a vent direction, and a channel in communication with the vents from the stack of lithium-ion cells, wherein the channel is configured to redirect venting gases from the vent direction to a channel direction.
Aspect 9 includes the electric vehicle of Aspect 8, wherein the stack of lithium-ion cells are at least partially enclosed in a module housing.
Aspect 10 includes the electric vehicle of any one of Aspects 8-9, wherein the stack of lithium-ion cells are arranged in a single row of cells.
Aspect 11 includes the electric vehicle of any one of Aspects 8-10, wherein the stack of lithium-ion cells are arranged in multiple rows of cells.
Aspect 12 includes the electric vehicle of any one of Aspects 8-11, wherein the stack of lithium-ion cells includes multiple cell banks and the channel includes a trunk vent with multiple sub-vents.
Aspect 13 includes the electric vehicle of any one of Aspects 8-12, wherein the channel is oriented to vent to a side of the electric vehicle.
Aspect 14 includes the electric vehicle of any one of Aspects 8-13, wherein the channel is oriented to vent to a bottom of the electric vehicle.
Aspect 15 includes a method of forming a battery module. The method includes stacking a number of lithium-ion cells, each cell including electrical terminals and a vent, the vent defining a vent direction, covering a terminal surface of number of lithium-ion cells with a first layer, wherein the electrical terminals pass through the first layer, and vent openings are included in the first layer and configured to allow venting gas to pass through the first layer, and forming a channel in communication with the vent openings, wherein the channel is configured to redirect venting gases from the vent direction to a channel direction.
Aspect 16 includes the method of Aspect 15, wherein forming the channel includes arranging spaces in multiple layers over the terminal surface.
Aspect 17 includes the method of any one of Aspects 15-16, wherein forming the channel includes coupling a metal tube adjacent to the vent openings.
Aspect 18 includes the method of any one of Aspects 15-17, wherein covering a terminal surface of number of lithium-ion cells with a first layer includes covering with an aerogel layer.

### conclusion or terminology or some other heading like it

The above description is intended to be illustrative, and not restrictive. In one aspect, the above-described aspects (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

Although an overview of the inventive subject matter has been described with reference to specific aspect embodiments, various modifications and changes may be made to these embodiments without departing from the broader scope of embodiments of the present disclosure. Such embodiments of the inventive subject matter may be referred to herein, individually or collectively, by the term "invention" merely for convenience and without intending to voluntarily limit the scope of this application to any single disclosure or inventive concept if more than one is, in fact, disclosed.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

As used herein, the term "or" may be construed in either an inclusive or exclusive sense. Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present disclosure. In general, structures and functionality presented as separate resources in the aspect configurations may be implemented as a combined structure or resource. Similarly, structures and functionality presented as a single resource may be implemented as separate resources. These and other variations, modifications, additions, and improvements fall within a scope of embodiments of the present disclosure as represented by the appended claims. The specification and drawings are, accordingly, to be regarded in an illustrative rather than a restrictive sense.

The foregoing description, for the purpose of explanation, has been described with reference to specific aspect embodiments. However, the illustrative discussions above are not intended to be exhaustive or to limit the possible aspect embodiments to the precise forms disclosed. Many modifications and variations are possible in view of the above teachings. The aspect embodiments were chosen and described in order to best explain the principles involved and their practical applications, to thereby enable others skilled in the art to best utilize the various aspect embodiments with various modifications as are suited to the particular use contemplated.

It will also be understood that, although the terms "first," "second," and so forth may be used herein to describe various elements, these elements should not be limited by these terms. These terms are only used to distinguish one element from another. In one aspect, a first contact could be termed a second contact, and, similarly, a second contact could be termed a first contact, without departing from the scope of the present aspect embodiments. The first contact and the second contact are both contacts, but they are not the same contact.

The terminology used in the description of the aspect embodiments herein is for the purpose of describing particular aspect embodiments only and is not intended to be limiting. As used in the description of the aspect embodiments and the appended aspects, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

## Claims

1. A battery module, comprising:
a stack of lithium-ion cells, each cell including electrical terminals;
a vent on each cell of the stack of lithium-ion cells, each vent defining a vent direction; and
at least one channel in communication with the vents from the stack of lithium-ion cells, wherein the channel is configured to redirect venting gases from the vent direction to a channel direction.

2. The battery module of claim 1, further including multiple cover layers located over a side of the stack of lithium-ion cells that includes the electrical terminals, wherein the electrical terminals pass through openings in one or more of the multiple cover layers.

3. The battery module of claim 2, wherein one or more layers of the multiple cover layers includes an aerogel.

4. The battery module of claim 2 or claim 3, further including a battery management circuit located in one or more of the multiple cover layers.

5. The battery module of claim 4, wherein the battery management circuit is separated from the channel by at least one of the multiple cover layers and optionally wherein the channel is filled with a sacrificial material.

6. The battery module of any of claims 2 to 5, wherein the channel is defined by one or more spaces in the multiple cover layers or wherein the channel is embedded in a resilient layer of the multiple cover layers.

7. The battery module of any preceding claim, wherein the channel is a separate component included within multiple layers.

8. An electric vehicle, comprising:
a vehicle chassis;
a plurality of wheels coupled to the vehicle chassis, the plurality of wheels driven by one or more electric motors;
a battery module connected to the one or more electric motors, the battery module including;
a stack of lithium-ion cells, each cell including electrical terminals;
a vent on each cell of the stack of lithium-ion cells, each vent defining a vent direction; and
a channel in communication with the vents from the stack of lithium-ion cells, wherein the channel is configured to redirect venting gases from the vent direction to a channel direction.

9. The electric vehicle of claim 8, wherein the stack of lithium-ion cells are at least partially enclosed in a module housing.

10. The electric vehicle of claim 8 or claim 9, wherein the stack of lithium-ion cells are arranged in a single row of cells or wherein the stack of lithium-ion cells are arranged in multiple rows of cells.

11. The electric vehicle of any of claims 8 to 10, wherein the stack of lithium-ion cells includes multiple cell banks and the channel includes a trunk vent with multiple sub-vents.

12. The electric vehicle of any of claims 8 to 11, wherein the channel is oriented to vent to a side of the electric vehicle or wherein the channel is oriented to vent to a bottom of the electric vehicle.

13. A method of forming a battery module, comprising:
stacking a number of lithium-ion cells, each cell including electrical terminals and a vent, the vent defining a vent direction;
covering a terminal surface of number of lithium-ion cells with a first layer, wherein the electrical terminals pass through the first layer, and vent openings are included in the first layer and configured to allow venting gas to pass through the first layer; and
forming a channel in communication with the vent openings, wherein the channel is configured to redirect venting gases from the vent direction to a channel direction.

14. The method of claim 13, wherein forming the channel includes arranging spaces in multiple layers over the terminal surface and/or wherein forming the channel includes coupling a metal tube adjacent to the vent openings.

15. The method of claim 13 or claim 14, wherein covering a terminal surface of number of lithium-ion cells with a first layer includes covering with an aerogel layer.
